# EUROPEAN PATENT APPLICATION

(11) **EP 0 632 964 A1**
(43) Date of publication of application: **11.01.1995**
(21) Application number: 94304895.9
(22) Date of filing: 04.07.1994
(51) Int. Cl.: A23L 1/32, A23L 1/015

(54) **Method for extracting cholesterol from egg yolk**

(30) Priority: 07.07.1993 US 88428
(71) Applicant: KRAFT FOODS, INC., White Plains New York 10625 (US)
(72) Inventor: Hockenberry, Pamela Schaffer, Evanston, Illinois 60202 (US); Gallaher, David McRoberts, Gurnee, Illinois 60031 (US); Blonigen, Scott James, Ames, Iowa 50010 (US)
(74) Representative: Eyles, Christopher Thomas

(57) **Abstract**

The present invention is directed to a method for extracting cholesterol from egg yolk. In accordance with the method, the mixture of egg yolk solids, water and oil is provided. The mixture is then subjected to high shear homogenization by pumping the mixture through homogenizing apparatus capable of generating pressures of up to about 18,000 psig (about 1242.13 bar). The mixture is then separated into water and oil phases by centrifugation to provide an oil phase which retains the cholesterol and a water phase which contains the egg solids.

## Description

### Field of the Invention

The present invention relates to a process for reducing the amount of cholesterol in egg yolk. More particularly, the present invention is directed to a decholesterolization process for egg yolk which utilizes high pressure, high impact homogenization.

### Background of the Invention

Because of the desirability of egg yolk and a large number of applications of egg yolk in foods, substantial research effort has been directed to removal of cholesterol from egg yolks, as well as food products which include these materials as ingredients. Egg yolk contains a high level of cholesterol and saturated fats and is itself an emulsion comprising a dispersion of oil droplets in a continuous phase of aqueous components. It has a total solid content of approximately 50% to 52%, composed of 15.5% to 16.5% protein, 31.5% to 34.5% lipid, 0.5% to 1.5% carbohydrate and 0.9% to 1.2% ash. The egg yolk lipids comprise as their main components approximately 65% triglyceride, 29% phospholipid and 5% cholesterol.

There is almost universal agreement among physicians and dieticians that the intake of cholesterol and saturated fats, which are prevalent in western country diets, should be reduced. Because of the high level of cholesterol in egg yolks, substantial research effort and many patents have been directed to the removal of cholesterol from egg yolks.

Generally, three approaches have been taken for removal of cholesterol from egg yolk. Early efforts, such as set forth in U.S. Patent No. 3,563,765 to Melnick, utilized a non-polar solvent, such as hexane, to extract cholesterol from dried egg yolk. U.S. Patent No. 4,234,619 to Yano, et al. is also directed to removal of cholesterol from egg yolk with a solvent, liquid dimethyl ether. The extraction of cholesterol from egg yolk is discussed in "Extraction and Processing of Various Components from Egg Yolk", Larson, et al., published as Paper No. 5984, Journal Series, Nebraska Agricultural Station, Lincoln, in N.E. 68583, April 21, 1980. The Larson, et al. reference describes an extraction procedure to separate lipid, aqueous and protein fractions from egg yolk utilizing various solvents. The solvents used were ethanol, isopropanol, hexane-ethyl alcohol, and hexane-isopropyl alcohol. U.S. Patent No. 4,104,286 to Fallis describes a process for isolating cholesterol from dried whole egg and dried egg yolk which includes extraction with aqueous ethanol, saponification in aqueous ethanolic alkali metal hydroxide and concentration and purification with a hydrocarbon solvent and methanol.

A considerable amount of research has been directed to the use of edible vegetable oils to remove cholesterol from egg yolks through transference of the cholesterol from the egg yolk emulsion to the edible oil.

U.S. Patent No. 4,333,959 to Bracco, et al. describes a process of reducing the amount of cholesterol in egg yolk which comprises reducing the pH of fresh, wet egg yolk to destabilize the emulsion, treating the destabilized emulsion with an edible oil to form a fine dispersion and centrifuging the dispersion to separate the egg yolk phase from the oil phase. The Bracco, et al. patent indicates that the fine dispersion of the destabilized egg yolk and edible oil may.be formed by homogenization, such as by using an agitator mill with microballs, a high pressure homogenizer or intensive vibration as used in continuous disintegration devices. The Bracco, et al. patent indicates that when a homogenizer is used, the speed is from 5,000 to 10,000 rpm and the homogenization is carried out for a period of 5 to 90 minutes.

U.S. Patent No. 4,103,040 to Fioritto describes a process for extracting cholesterol from egg yolk by mixing wet egg yolk with an edible oil by means of high energy, high shear mixing. During mixing, cholesterol is said to be extracted from the yolk by the oil. Simultaneously, the ratio of polyunsaturated fat to saturated fat in the yolk is increased. The types of apparatus used in the Fioritto patent for imparting high shear mixing include the use of a Waring blender, a Model W-185D Sonifier Cell Disruptor (sonic energy), and a jacketed kettle equipped with a turbine-type, self-baffled mixer. In each case, the high shear mixing was conducted for a substantial period of time of from 5 to 15 minutes. U.S. Patent No. 3,717,474, to Fioritto, et al. also describes a process for transferring cholesterol from wet egg yolk to an edible oil and simultaneously increasing the ratio of polyunsaturated fat to saturated fat in the yolk. The wet egg yolk is combined with an edible oil by high energy, high shear mixing, such as by use of a Waring blender.

The difficulties of attempting to extract cholesterol from egg yolk by transference of the egg yolk to an edible oil is illustrated in Great Britain 2,238,456 to Conti, et al. The Conti, et al. patent is directed to a process wherein a mixture of cholesterol containing egg in aqueous solution is emulsified with an edible oil containing a monoglyceride. The mixture of edible oil and egg is heated to a temperature below 70° C. and is stirred sufficiently to insure intimate admixture of the oil phase in the aqueous phase. It is indicated that the monoglyceride serves to facilitate oil lipid interaction in the presence of the aqueous phase. The fat and the egg are partitioned into the monoalyceride containing oil phase. Agitation is continued for a time sufficient to exchange or extract cholesterol and fat from the aqueous phase to the oil phase. The Conti, et al. patent utilizes low energy, low-shear stirring, such as a propeller, to effect interaction of the cholesterol with the monoglyceride containing edible oil. Typically, the mixture of edible oil containing monoglyceride and the egg yolk is stirred for between 5 and 60 minutes, preferably between about 15 and 45 minutes, and more preferably between about 20 and 30 minutes. It is pointed out in the conti, et al. patent, that there is very little removal of cholesterol from the egg yolk to the oil phase unless the monoglyceride concentration in the oil phase is greater than about 5%.

Accordingly, from the foregoing review of the prior art, it can be readily seen that the extraction of cholesterol from egg yolk is a perplexing problem that has required the use of high shear mixing for substantial periods of time or the use of low shear mixing with complicated treatment procedures to effect a substantial level of cholesterol removal from egg yolk.

It is a principal object of the present invention to provide a simple, substantially instantaneous method for causing interaction of cholesterol in egg yolk with an edible oil to transfer the cholesterol from the egg yolk to the edible oil at high levels of decholesterolization of the egg yolk.

### Brief Description of the Drawings

FIGURE 1 is a cross-sectional view of a high pressure, high shear homogenizer useful in the practice of the present invention; and
FIGURE 2 is a plot of percent cholesterol removed versus number of passes through a high pressure homogenizer in the process of the invention and a high shear mixer used in prior art processes.

### Summary of the Invention

The present invention is directed to a method for extracting cholesterol from egg yolk. In accordance with the method, the mixture of egg yolk solids, water and oil is provided. The mixture is then subjected to high shear homogenization by pumping the mixture through homogenizing apparatus capable of generating pressures of up to about 21,000 psig (about 1448.98 bar), preferably about 13,500 psig (about 931.85 bar). The mixture is then separated into water and oil phases by centrifugation to provide an oil phase which retains the cholesterol and a water phase which contains the egg solids.

### Detailed Description of the Invention

Generally, in accordance with the present invention, a homogeneous premix of egg yolk solids, water and vegetable oil is formed by low shear mixing. The premix is then subjected to high shear homogenization by pumping the premix through homogenizing apparatus capable of imparting high shear and high pressure.

The egg yolk can be fresh egg yolk, frozen egg yolk or reconstituted dried egg yolk. If dried egg yolk is used, the egg yolk is reconstituted with sufficient water to provide at least a level of water normally associated with fresh egg yolk, i.e. about 50% egg yolk solids and 50% water. In general, the premix of the present invention can contain from about 10% to about 32% egg yolk solids (dry basis), from about 35% to about 85% vegetable oil and from about 10% to about 35% water. All percentages used herein are by weight, based on the weight of the premix, unless otherwise indicated.

It should be understood that the high pressure homogenization step of the present invention is not equivalent to subjecting a mixture of egg yolk solids, water and vegetable oil to high shear mixing. The process of high shear mixing involves blending of components and dispersion of ingredients. The high pressure homogenization step of the present invention is not a blending or dispersion operation. High pressure homogenization is characterized by impact forces of the process fluid against the homogenizing valve and extremely high fluid velocities. The shear forces in the high pressure homogenizer are orders of magnitude higher than can be imparted by high shear mixers. The residence time per pass in a high pressure homogenizing valve is measured in fractions of seconds rather than at least several seconds which are used in a continuous high shear mixer. High shear mixers are typically used to blend fluid/fluid and fluid/particulate ingredients to make mixtures. The unit operation of mixing is not associated with the unit operation of homogenizing. High pressure homogenizers are used commercially for particle size reduction of liquid/particulate slurries and also for fat droplet size reduction in colloids and emulsions. The high shear mixing operation to extract cholesterol such as disclosed in U.S. Patent No. 3,717,474 to Fioriti, et al. was a part of an extraction process tailored to contact volume and time. The high pressure homogenization step used in the method of the present invention is used to significantly decrease the particle size of the fat globules while increasing contact surfaces to provide an instantaneous extraction of cholesterol by lowering the extraction energy barrier.

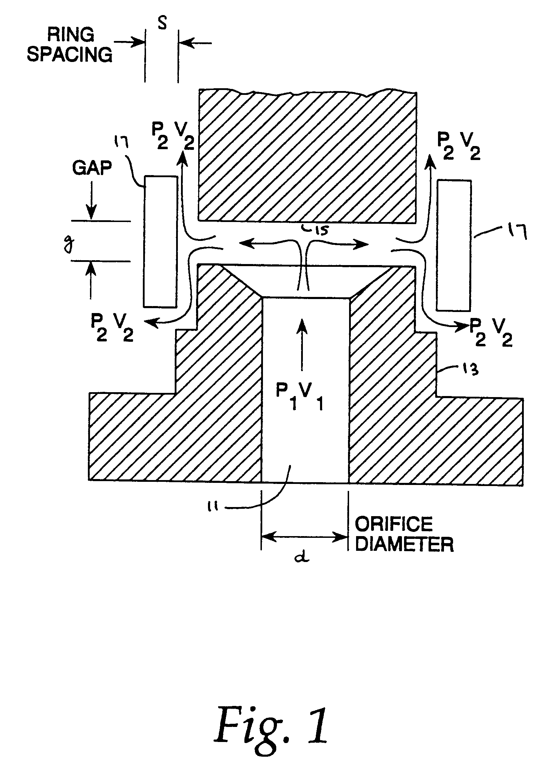

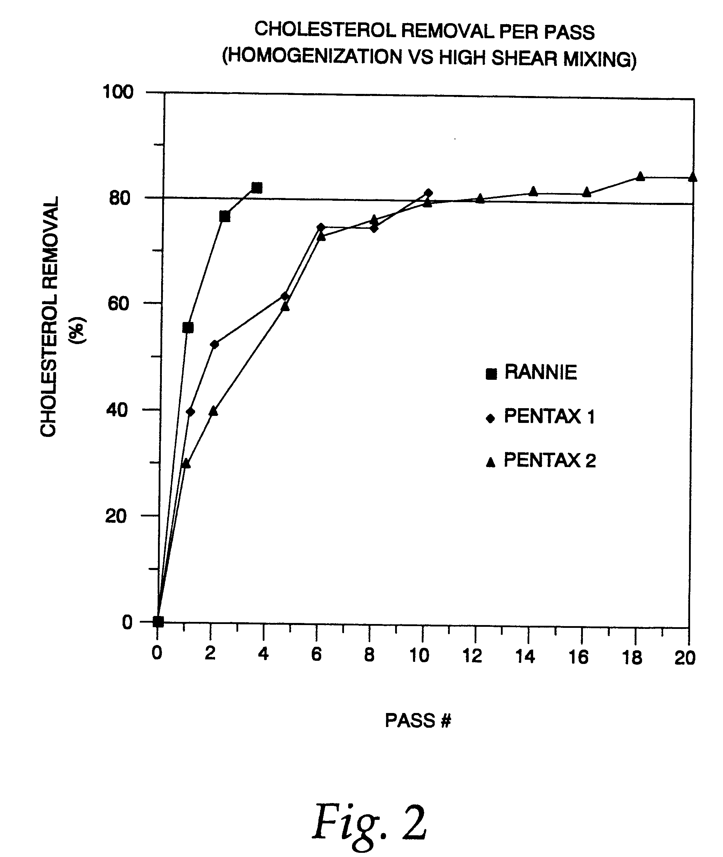

After preparation, the premix of egg yolk solids, water and oil is transferred by means of a suitable conduit and suitable pump through a high shear, high energy homogenizer operated at a pressure of at least about 4,500 psig (about 311.29 bar). A cross-section of a high shear, high pressure homogenization apparatus, a Rannie™ homogenizer manufactured by APV Rannie, Copenhagen is illustrated in FIGURE 1. The differences between use of a high shear homogenizer, such as the Rannie™ homogenizer, and a high shear mixer, such as a Pentax™ mixer are illustrated in Figure 2. The percent cholesterol removed is plotted against a number of passes through either the high shear homogenizer or the high shear mixer. A Pentax™ mixer is a horizontal tubular mixer provided with a series of pins mounted on a shaft, axially mounted in the tube. It can be readily seen that a single pass through the high shear homogenizer removes as much cholesterol as three or four passes through the Pentax mixer.

The high shear homogenizer illustrated in Figure 1 has a knife edge homogenization element located within a closely surrounding impact ring. As shown in Figure 1, the egg/oil premix enters the homogenizer through an orifice 11 which is located in a valve seat 13. The orifice 11 typically has a diameter d of from about 6 to about 10 mm. As the egg/oil premix proceeds through the orifice 11, it impacts on the knife edge 15 and valve seat 13. The gap g between the knife edge 15 and valve seat 13 is typically from about 0.005 to about 0.100 mm. The knife edge 15 and valve seat 13 cause an abrupt change in direction of flow of the premix causing it to impact onto the surface of the stream impact ring 17. The premix departs from the top and bottom of the stream impact ring at high velocities approaching the speed of sound. Generally, the initial pressure on the premix at the time of introduction into the orifice 11 is at least about 4,500 psig (about 311.29 bar), preferably at least about 9,000 psig (about 621.57 bar) and most preferably with the range of from about 10,000 psig to about 15,000 psig (about 690.52 bar to about 1035.28 bar). The spacing s between the stream impact ring 17 and the knife edge 15 and valve seat 13 is typically from about 0.5 to about 4mm. The pressure P2 of the departing premix is substantially atmospheric and the velocity V2 of the departing homogenate is in the range of from about 750 to about 3,000 feet per second (about 228.60 to about 914.40 meters per second).

The following examples will further illustrate various features of the invention but are intended to in no way limit the scope of the invention as set forth in the appended claims.

### Example 1

Four batches of a mixture of fresh egg, water and soybean oil were prepared having the following components:

| | |
|---|---|
| fresh eggs | 21.7 lb ( 9.84 kg) |
| water | 8.7 lb ( 3.95 kg) |
| soybean oil | 60.8 lb (27.58 kg) . |

The eggs and water were premixed in a suitable container. The soybean oil was placed in a jacketed, scraped surface kettle and was heated to a temperature of 90-130°F (32.2-54.4°C). The egg and water mixture was added to the oil with the scraped surface agitator on. The batch was heated in the kettle during agitation to a temperature of 125°F (51.7°C). The premix was then fed to a Rannie homogenizer by means of a Waukesha pump. The mixture entered the Rannie homogenizer at a temperature of 97-125°F (36.1-51.7°C) and exited at a temperature of 120-160°F (48.9-71.1°C). The pressure utilized in the Rannie homogenizer was 4,500-13,500 psig (311.29-931.85 bar). After passing through the Rannie homogenizer, the mixture was transferred to a kettle having a Lightnin™ mixer. The mixture was maintained in the kettle with the Lightnin mixer on for a period of 40 minutes and samples were taken at intervals of 5, 10, 20 and 40 minutes. The analysis of each of these samples is set forth in Table 1 hereinbelow.

The sample time "0" is for the sample after it has passed one time through the Rannie homogenizer. The 5, 10, 20 and 40 sample times are for those minutes in the kettle being mixed with the Lightnin mixer. Batches 1, 2 and 3 were run at 9,000 psig (621.57 bar), 13,500 psig (933.85 bar) and 4,500 psig (311.29 bar), respectively. Batch 4 was processed using a Dispax mixer, which is similar to a Pentax mixer.

**Table 1**

| Batch No. | Sample Time | Moisture % | CHL mg/100 g | Fat % | Protein % | CHL Loss % | Fat Loss % | Protein Loss % |
|---|---|---|---|---|---|---|---|---|
| Egg Yolk | | 51.48 | 894.00 | | 13.60 | | | |
| 1 | 0 | 72.84 | 150.00 | 8.86 | 9.44 | 79 | 52 | 13 |
| 1 | 5 | 72.90 | 150.00 | 8.60 | -- | 79 | 53 | |
| 1 | 10 | -- | -- | -- | -- | | | |
| 1 | 20 | 71.63 | 197.00 | 9.68 | 9.50 | 72 | 46 | 11 |
| 1 | 40 | 71.72 | 188.00 | 8.89 | -- | 73 | 51 | |
| 2 | 0 | 65.41 | 145.00 | 16.18 | 9.52 | 77 | 02 | 2 |
| 2 | 5 | 70.32 | 177.00 | 9.69 | -- | 74 | 45 | |
| 2 | 10 | 70.30 | 177.00 | 9.77 | -- | 74 | 45 | |
| 2 | 20 | 68.44 | 175.00 | 11.63 | -- | 74 | 33 | |
| 2 | 40 | 68.89 | 179.00 | 10.21 | 10.90 | 73 | 41 | -6 |
| 3 | 0 | 69.76 | 239.00 | 9.60 | 10.00 | 65 | 45 | 4 |
| 3 | 5 | 69.43 | 264.00 | 10.24 | -- | 61 | 41 | |
| 3 | 10 | 69.21 | 256.00 | 10.35 | -- | 62 | 41 | |
| 3 | 20 | 69.24 | 259.00 | 10.03 | -- | 62 | 43 | |
| 3 | 40 | 68.75 | 263.00 | 9.99 | 11.00 | 61 | 42 | |
| 3 | 40X | 69.33 | 232.00 | | -- | 66 | 42 | -8 |
| 4 | 0 | 66.17 | 556.00 | 15.40 | 9.49 | 14 | 08 | 4 |
| 4 | 5 | 65.84 | 573.00 | 15.40 | -- | 11 | 07 | |
| 4 | 10 | 65.63 | 589.50 | 15.89 | -- | 08 | 04 | |
| 4 | 20 | 65.58 | 593.00 | 15.78 | -- | 07 | 05 | |
| 4 | 40 | 64.94 | 570.00 | 16.05 | 9.45 | 10 | 02 | 2 |

From Table 1 it can be seen that at homogenization pressures below about 9,000 psig (621.57 bar), the efficiency of removal of cholesterol through homogenization is greatly reduced, although repeated passes at lower homogenization pressures could be used to obtain higher levels of cholesterol removal.

### Example 2

A premix of two batches of egg yolks, water and soybean oil were prepared as set forth in Example 1. The first batch contained 71 pounds (32.20 kg) of egg yolks, 28.4 pounds (12.88 kg) of water and 199 pounds (90.26 kg) of soybean oil. The second batch contained 40 pounds (18.14 kg) of egg yolks, 16 pounds (7.26 kg) of water and 112 pounds (50.80 kg) of soybean oil. The first batch was processed through a Pentax mixer at a temperature of 125-140°F (51.7-60.0°C). The transfer time through the Pentax mixer was 3 seconds. After being processed through the Pentax mixer, the batch 1 sample was pumped through a Rannie homogenizer at a pressure of 13,500 psig (931.85 bar). The second batch was processed through only the Rannie homogenizer at a pressure of 13,500 psig (931.-85 bar). The results are set forth hereinbelow in Table 2.

**Table 2**

| Batch 1 | | |
|---|---|---|
| Initial Cholesterol Level | % Cholesterol Removal After Pentax | Cholesterol Removal After Rannie |
| 625 mg/100 g | 25 | 66 |

| Batch 2 | | |
|---|---|---|
| Initial Cholesterol Level | % Cholesterol Removal After Rannie | |
| 782 mg/100 g | 55 | |

It can readily be seen from an examination of Table 2 that the Pentax mixer is not efficient to remove cholesterol from egg yolk. The subsequent processing of the egg yolk premix after passing the Pentax mixer and through the Rannie homogenizer clearly increases the cholesterol removal by a factor of about 3. It can also be seen that a single pass through the Rannie homogenizer at high pressure efficiently removes cholesterol substantially instantaneously.

## Claims

1. A method for removing cholesterol from egg yolk comprising providing a homogeneous mixture of egg yolk solids, water and vegetable oil by low shear mixing and subjecting said mixture to high pressure homogenization so as to transfer a major amount of the cholesterol in said egg yolk to said vegetable oil.

2. A method according to claim 1, wherein said high pressure homogenization is at a pressure of at least 4,500 psig (at least 311.29 bar).

3. A method according to claim 1 or claim 2, wherein said high pressure homogenization is at a pressure of at least 9,000 psig (at least 621.57 bar).

4. A method according to any one of claims 1 to 3, wherein said high pressure homogenization is at a pressure of from about 10,000 psig to about 15,000 psig (about 690.52 bar to about 1035.28 bar).

5. A method according to any one of claims 1 to 4, wherein said premix has from about 10% to about 32% egg yolk solids, from about 35% to about 85% vegetable oil and from about 10% to about 35% water.
